(19) Europäisches Patentamt

European Patent Office

Office européen des brevets

(11) **EP 1 004 808 B1**

(12) **EUROPEAN PATENT SPECIFICATION**

(45) Date of publication and mention
of the grant of the patent:
**21.05.2003 Bulletin 2003/21**

(51) Int Cl.⁷: **F16L 33/22**

(21) Application number: **99117316.2**

(22) Date of filing: **03.09.1999**

(54) **Quick-release coupling means for flexible hoses**

Schnellkupplungsvorrichtung für Schläuche

Raccord rapide pour tuyaux flexibles

(84) Designated Contracting States:
**DE ES FR GB IT**

(30) Priority: **27.11.1998 IT PN980084**

(43) Date of publication of application:
**31.05.2000 Bulletin 2000/22**

(73) Proprietor: **UNIFLEX UTILTIME S.p.A.**
**I-33086 Montereale Valcellina (Pordenone) (IT)**

(72) Inventors:
• **Borghese, Alladino**
**33086 Montereale Valcellina, Pordenone (IT)**

• **Magris, Erme**
**33086 Montereale Valcellina, Pordenone (IT)**

(74) Representative: **Giugni, Valter et al**
**PROPRIA S.r.l.,**
**Via Mazzini 13**
**33170 Pordenone (IT)**

(56) References cited:
**EP-A- 0 875 711          DE-A- 4 433 812**
**GB-A- 2 119 465**

**Description**

The present invention refers to quick-release coupling means for connecting flexible hoses, in particular such hoses made of plastics, which enable hoses to be connected that may even appreciably differ from each other in their diameter size and/or wall thickness.

A prior-art connector means of such a kind (such as disclosed in GB 1 281 904) comprises a coupling spigot formed by an externally threaded body and a frusto-conical end portion with a ribbed outer surface for insertion into the corresponding end portion of the hose to be connected, an elastic element engaging the outer surface of said hose, and an outer rigid clamping ring that, by screwing on the spigot body, causes the elastic element, the hose and the spigot to be clamped firmly together. Such a type of coupling means ensures an effective clamping of the end portion of the flexible hose, but fails to enable the arrangement to effectively accomodate for hoses of differing diameter and/or wall thickness.

A further prior-art connector arrangement (known from the disclosure in GB 2 119 465) represents an improvement over the above cited solution, since it allows for a wider variation in the size of the hoses that can be connected, thereby doing away with the drawback of hoses with a larger diameter size being constricted to an excessive extent in the connector. This connector is characterized in that only an elastic ring needs to be inserted between the coupling spigot and the rigid clamping ring nut when a hose with a maximum diameter has to be connected, while two or more such elastic rings are inserted in series when hoses with smaller diameters have to be connected. This solution appears to be more effective than the previous one, but it still proves scarcely rational. As a matter of fact, the use of a plurality of elastic rings brings about not only an excessive usage of material, along with an aggravation in the functional and construction complexity of the connector, but also the drawback of the rings getting possibly lost when not used in the assembly, so that they must be appropriately stored.

More recently, a hose connector has again been disclosed (patent EP-A-0 875 711) which also comprises a coupling spigot on to which the end portion of the hose to be connected is inserted, an elastic ring engaging the outer surface of the hose to be connected, and a rigid ring nut for clamping the elastic ring against the outer surface of the hose, as they are actually provided in the above mentioned prior-art solutions. This hose connector, however, is mainly characterized in that the elastic ring is attached to the coupling spigot through an axially sliding engagement, so as to be able to be adjusted into different positions as required in view of enabling hoses of different sizes to be inserted between the coupling spigot and the elastic ring. While this solution actually represents a further improvement over the afore cited ones from a functional point of view, it still may not be considered as being the optimum one from a construction point of view, owing to the need arising for producing and assembling such an additional element as the sliding ring.

It is therefore a main purpose of the present invention to provide coupling means for flexible hoses which enable hoses having different diameter and/or wall thickness sizes to be connected, while doing away with the limitations and the drawbacks of the afore mentioned prior-art hose coupling means. In particular, the new hose coupling means shall be such as to reduce its part count to a minimum and this is obtained through the elimination of any possible ring which is provided loose or anyway movable inside the connector assembly.

According to the present invention as defined in claim 1, this aim is reached in a hose coupling means that comprises a connection spigot having a conical end portion on to which the end portion of the hose to be connected is inserted, said conical spigot having diameters and lengths that are in a mutual relation in accordance to definite geometrical proportions. In particular, defined are a range of ratios of the maximum diameter to the total length of the conical portion of the spigot, as well as a range of ratios of an intermediate diameter to the length of the respective portion of spigot. Furthermore, an additional geometrical constraint, that establishes a relation between the outside maximum diameter and the outside minimum diameter of the spigot, is provided in order to enable also a small-diameter hose to be connected with a coupling means adapted to connect hoses with a substantially larger diameter.

The invention will anyway be more readily and clearly understood in its features and advantages from the description that is given below by way of non-limiting example with reference to the accompanying drawings, in which

- Figure 1 is a longitudinal-section axial view of a coupling means according to the invention; and

- Figure 2 is an enlarged longitudinal-section view of the connection end portion of the coupling means illustrated in Figure 1.

The coupling means according to the present invention is made of plastics and comprises a body 10 that is provided with a central spigot 11 adapted to accomodate the end portion of the hose to be coupled (not shown).

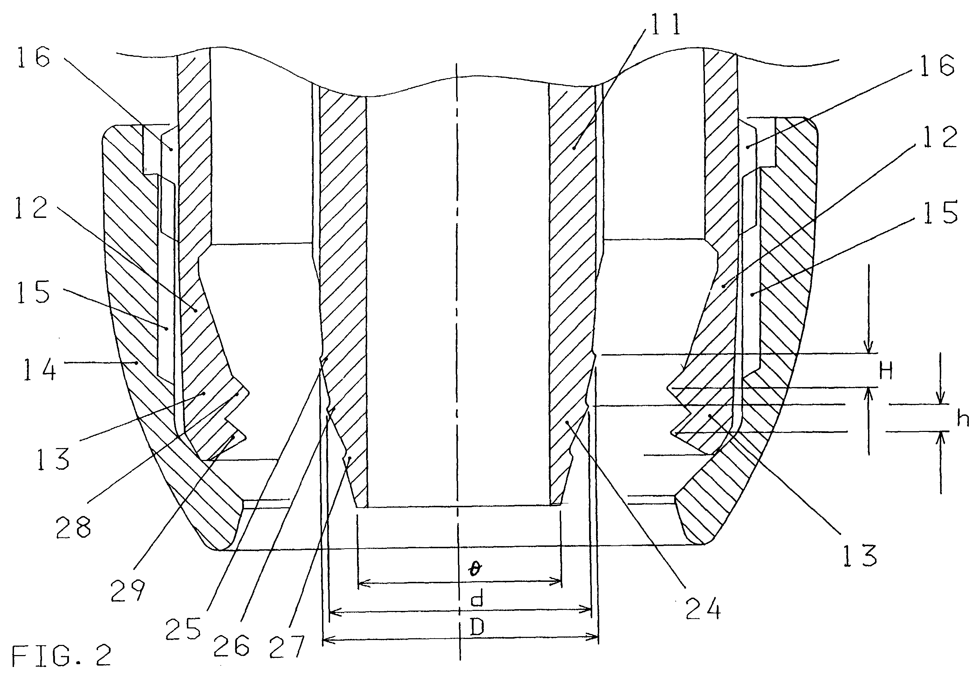

The body 10 of the coupling means is furthermore provided with a series of circumferentially arranged elastic clasping elements 12 which extend parallelly to the axis of the spigot 11 and are radially spaced therefrom. In a preferred manner, the end portions of said clasping elements 12 are provided with inner teeth 13 adapted to engage the outer surface of the hose inserted on the spigot 11. The hose is then clamped firmly on the spigot 11 by means of a ring nut 14 which is provided with inner threads adapted to engage the corresponding threads 16 provided on the outer surface of the body 10 (Figure 2). The ring nut 14 is in the shape of an ogive having its smaller diameter at that end where it clamps the hose against the spigot 11.

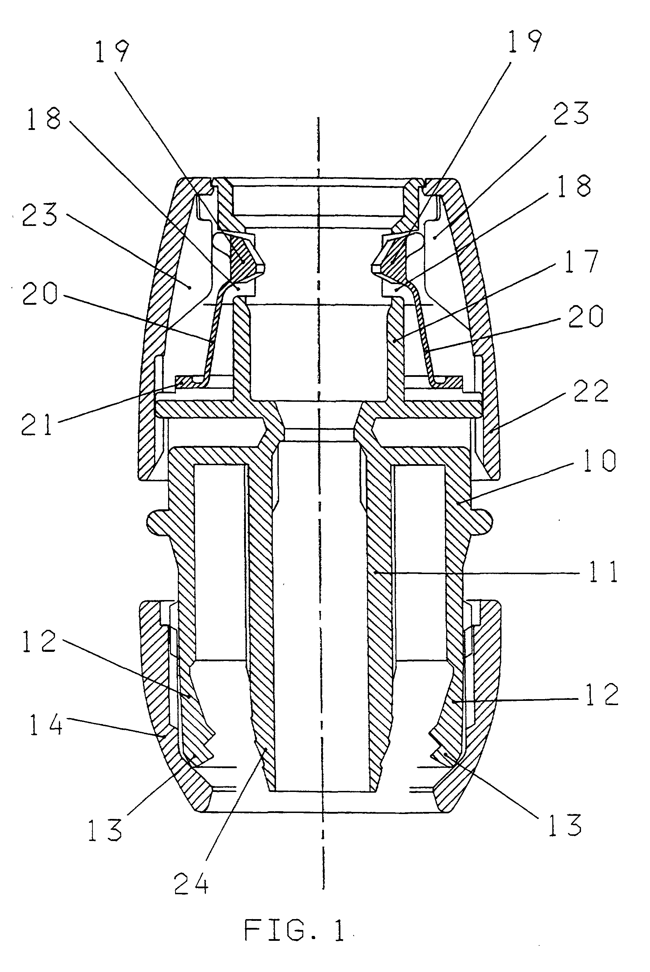

In order to complete the coupling, on the opposite side of the spigot 11 the body 10 extends axially with an appropriately shaped mouthpiece 17 (Figure 1) for the insertion of the male portion (not shown) of the coupling means. Said mouthpiece 17 is provided with at least two apertures 18 passing through the cylindrical wall thereof, in which respective toothed ends 19 of as many elastic arms 20 are capable of being inserted. Said elastic arms 20 are attached to a ring 21 that is inserted on said mouthpiece 17. A release ring 22 is inserted in an axially slidable manner on the mouthpiece 17, and is provided with inner ribs 23 pressing against the toothed ends 19 of the elastic arms 20, so as to keep them inserted in the apertures 18 of the mouthpiece 17.

The above described coupling means enables hoses of differing diameters to be connected thereto, such as for instance hoses with a diameter varying from 0.50 in. to 0.75 in. (12.7 to 19.05 mm) and corresponding wall thicknesses, by simply inserting the end portion thereof on to the terminal portion of the spigot 11 and clamping it by screwing the ring nut 14 on the body 10. According to the present invention, in fact, the spigot 11 is cylindrical, but terminates in a frusto-conical portion 24 (Figure 2) as a fitting for the attachment of the hose to be connected. The portion 24, against which the end portions 13 of the clasping elements 12 are gripping, may have a smooth outer surface. In a preferred manner, however, such a surface is ribbed so as to increase the friction with the hose and improve the clamping effect. The most advantageous solution consists in providing the portion 24 with three circular ridges 25, 26, 27, in a substantially equally spaced arrangement in the axial direction, and each end portion 13 of the clasping elements 12 with at least two reliefs 28, 29 opposing the portion 24 in intermediate positions between the ridges 25, 26 and 26, 27, respectively.

The possibility for hoses of differing diameter to be connected is ensured by the special geometry that has been worked out for the frusto-conical terminal portion 24 of the spigot 11. By selecting both the diameter and the axial dimensions of the portion 24 in an appropriate manner, ie. within definite mutual proportions, it is possible for the desired versatility of the coupling means to be ensured. In this connection, a first geometrical constraint is as follows:

$$5 \leq D/H \leq 18 \qquad (a)$$

where:

D = maximum outside diameter of the spigot 11, corresponding also to the axially innermost ridge 25;

and
H = axial distance from the innermost ridge 25 to the innermost relief 28 of the clasping elements 12.

A second characterizing ratio then is:

$$7 \leq d/h \leq 16 \qquad (b)$$

where:

d = intermediate diameter of the frusto-conical portion 24, corresponding also to the intermediate ridge 26; and
h = axial distance from the intermediate ridge 26 to the outermost relief 29 of the clasping elements 12.

The first pre-condition (a) must be complied with in order to enable larger-diameter (ie. $\geq 5/8$) hoses to be inserted thereon, whereas the second pre-condition (b) must be complied with in order to enable smaller-diameter (ie. $\leq 5/8$) hoses to be inserted thereon.

For still smaller-diameter hoses a third pre-condition must furthermore be complied with:

$$2 \leq (D-\theta) \leq 7 \qquad (c)$$

where:

$\theta$ = outside diameter of the insertion end of the frusto-conical portion 24.

The above mentioned geometrical ratios have been identified experimentally with the use of such flexible hoses as typically found on the market.

The frusto-conical portion 24 of the spigot 11 may also have a smooth outer surface. In this case, the axial distances H and h, as well as the diameter d, will be referred to lengths of the portion 24 which correspond axially to those indicated in Figure 2 for the portion 24 provided with ridges.

The coupling means according to the present invention can therefore be considered as being extremely simple and rational, while achieving a minimization in its part count and actually representing quick-release connector means of the so-called "universal" type.

**Claims**

1. Quick-release coupling means for the connection of flexible hoses having different diameter and/or wall-thickness sizes, comprising a body (10) provided with a coupling spigot (11) and a series of elastic clasping elements (12) that are clamped against the spigot (11) by a ring nut (14) being tightened thereon, **characterized in that** the spigot (11) terminates in a frusto-conical portion (24) on which the hose to be connected is inserted, and that each clasping element (13) is provided with axially spaced reliefs (28, 29) facing the portion (24), the diameters of the portion (24) and the reliefs of the clasping elements (12) being in a relation with each other according to following geometrical ratios:

$$5 \leq D/H \leq 18 \qquad (a)$$

$$7 \leq d/h \leq 16 \qquad (b)$$

$$2 \leq (D\text{-}\theta) \leq 7 \qquad (c)$$

where:

D = maximum outside diameter of the spigot 11;
H = axial distance from the inward end of the frusto-conical portion (24) to the innermost relief (28) of the clasping elements (12);
d = intermediate diameter of the frusto-conical portion (24);
h = axial distance from the section with a diameter (d) to the outermost relief (29) of the clasping elements (12);
θ = outside diameter of the insertion end of the frusto-conical portion (24).

2. Quick-release coupling means for the connection of flexible hoses according to claim 1, **characterized in that** the frusto-conical portion (24) is provided with three circular ridges (25, 26, 27) that are substantially equally spaced from each other in an axial direction, so that the diameter (D) corresponds to the diameter of the innermost ridge (25) and the diameter (d) corresponds to the diameter of the intermediate ridge (26).

**Revendications**

1. Raccord rapide destiné à la connexion de tuyaux flexibles ayant des dimensions de diamètre et/ou d'épaisseur de paroi différentes, comprenant un corps (10) comportant un embout d'accouplement (11) et une série d'éléments élastiques de verrouillage (12) qui sont bloqués contre l'embout (11) par un écrou annulaire (14) qui est serré sur celui-ci, **caractérisé en ce que** l'embout (11) se termine en une partie en cône tronqué (24) sur laquelle est introduit le tuyau à connecter, et **en ce que** chaque élément de verrouillage (13) comporte des saillies espacées dans le sens axial (28, 29) faisant face à la partie (24), les diamètres de la partie (24) et des saillies des éléments de verrouillage (12) étant dans une relation mutuelle selon les rapports géométriques qui suivent :

$$5 \leq D/H \leq 18 \qquad (a)$$

$$7 \leq d/h \leq 16 \qquad (b)$$

$$2 \leq (D\text{-}\theta) \leq 7 \qquad (c)$$

dans lequels

D = un diamètre externe maximal de l'embout (11) ;
H = une distance axiale entre l'extrémité dirigée vers l'intérieur de la partie en cône tronqué (24) et la saillie la plus à l'intérieur (28) des éléments de verrouillage (12) ;
d = un diamètre intermédiaire de la partie en cône tronqué (24) ;
h = une distance axiale entre la section à diamètre (d) et la saillie la plus à l'extérieur (29) des éléments de verrouillage (12) ;
θ = un diamètre extérieur de l'extrémité d'introduction de la partie en cône tronqué (24).

2. Raccord rapide destiné à la connexion de tuyaux flexibles selon la revendication 1, **caractérisé en ce que** la partie en cône tronqué (24) comporte trois arêtes circulaires (25, 26, 27) qui sont espacées les unes des autres essentiellement de manière égale dans une direction axiale, de sorte que le diamètre (D) correspond au diamètre de l'arête la plus à l'intérieur (25) et que le diamètre (d) correspond au diamètre de l'arête intermédiaire (26).

**Patentansprüche**

1. Schnelltrennkupplungseinrichtung zum Anschließen von flexiblen Schläuchen mit unterschiedlichen Durchmesser- und/oder Wanddickengrößen, die einen Körper (10) umfasst, der mit einem Kupplungszapfen (11) und einer Reihe elastischer Klammerelemente (12) versehen ist, die an den Zapfen (11) durch eine Ringmutter (14) geklemmt werden, die daran angezogen wird, **dadurch gekennzeichnet, dass** der Zapfen (11) in einem kegelstumpfförmigen Teil (24) endet, an dem der anzuschließende Schlauch eingeführt wird, und dass jedes Klammerelement (13) mit axial beabstandeten Erhöhungen (28, 29) versehen ist, die dem Abschnitt (24) zugewandt sind, wobei die Durchmesser des Teils (24) und der Erhöhungen der Klammerelemente (12) den folgenden geometrischen Verhältnissen entsprechend in Beziehung zueinander stehen:

$$5 \leq D/H \leq 18 \qquad (a)$$

$$7 \leq d/h \leq 16 \qquad (b)$$

$$2 \leq (D-\theta) \leq 7 \qquad (c)$$

wobei:

D = maximaler Außendurchmesser des Zapfens (11);

H = axialer Abstand vom inneren Ende des kegelstumpfförmigen Teils (24) zur innersten Erhöhung (28) der Klammerelemente (12);

d = mittlerer Durchmesser des kegelstumpfförmigen Teils (24);

h = axialer Abstand von dem Abschnitt einem Durchmesser (d) zu der äußersten Erhöhung (29) der Klammerelemente (12);

θ = Außendurchmesser des Einführendes des kegelstumpfförmigen Teils (24).

2. Schnelltrennkupplungseinrichtung zum Anschließen von flexiblen Schläuchen nach Anspruch 1, **dadurch gekennzeichnet, dass** der kegelstumpfförmige Teil (24) mit drei kreisförmigen Stegen (25, 26, 27) versehen ist, die in einer axialen Richtung im Wesentlichen gleichmäßig voneinander beabstandet sind, so dass der Durchmesser (D) dem Durchmesser des innersten Steges (25) entspricht und der Durchmesser (d) dem Durchmesser des mittleren Steges (26) entspricht.

FIG. 1

FIG. 2

EP 1 004 808 B1